# EUROPÄISCHE PATENTSCHRIFT

(11) **EP 2 371 631 B1**
(45) Veröffentlichungstag und Bekanntmachung des Hinweises auf die Patenterteilung: **15.04.2015**
(21) Anmeldenummer: 11155914.2
(22) Anmeldetag: 25.02.2011
(51) Int. Cl.: B60R 25/00, G07C 9/00

(54) **Kontrolle einer Zugriffsberechtigung für eine Baumaschine**
Control of access authorisation for a working vehicle
Contrôle de justification d'accès pour un véhicule de travail

(30) Priorität: 05.03.2010 DE 102010010529
(43) Veröffentlichungstag der Anmeldung: 05.10.2011
(73) Patentinhaber: TeraTron GmbH, 51647 Gummersbach (DE)
(72) Erfinder: Petsching, Wilfried, 51702, Bergneustadt (DE); Weiss, Bernd, 51645, Gummersbach (DE)
(74) Vertreter: Cohausz & Florack

(56) Entgegenhaltungen:
- EP-A2- 1 302 374
- DE-A1- 10 004 615
- DE-A1- 10 100 576
- DE-A1- 19 703 998

## Beschreibung

Der Gegenstand betrifft eine Baumaschine mit einem System als auch ein Verfahren zur Kontrolle einer Zugriffsberechtigung für eine Baumaschine.

DE 101 00 576 offenbart ein System zur Kontrolle einer Zugriffsberechtigung für ein Kraftfahrzeug mit einer Mehrzahl von jeweils für den Zugriff auf zwei verschiedene Kraftfahrzeuge eingerichtete Schlüssel. Jeder der Schlüssel weist eine über einen eingebauten Transponder auslesbare eindeutige Identifizierungskennung auf und einen jeweils genau einem Kraftfahrzeug zugeordneten Hauptschlüssel. Eine eindeutige Identifizierungskennung eines dem Kraftfahrzeug nicht zugeordneten Schlüssels ist mit Hilfe des originären Zugangsschlüssels des Kraftfahrzeugs dem Kraftfahrzeug durch ein Anlernen zuordenbar.

Zugriffsberechtigungen, insbesondere sogenannte "keylessentry" Zugriffskontrollsysteme sind hinlänglich bekannt. Bei solchen Systemen kommunizieren Kraftfahrzeuge über hochfrequente elektromagnetische Felder mit Transpondern, um eine Identifizierungskennung des Transponders abzufragen. Entspricht die von dem Transponder abgefragte Identifizierungskennung einer, welche von dem Fahrzeug als gültig bzw. autorisiert gespeichert ist, kann der Zugang zu dem Fahrzeug freigegeben werden. Außerdem kann abhängig von der Identifizierungskennung des Transponders eine Wegfahrsperre des Fahrzeugs freigegeben werden, so dass das Fahrzeug bewegt werden kann, z.B. Starten des Motors.

Eine solche Technologie ist derzeit jedoch nur für Personenkraftwagen im Betrieb. Bei diesen Fahrzeugen unterscheiden sich die mechanischen Schließsysteme der einzelnen Fahrzeuge voneinander. So ist es nicht möglich, mittels der mechanischen Kodierung eines ersten Schlüssels, welcher einem ersten Fahrzeug zugeordnet ist, ein zweites Fahrzeug zu öffnen oder zu starten. Die mechanische Kodierung der Schlüssel erlaubt es jedoch, das dem Schlüssel zugeordnete Fahrzeug mechanisch zumindest zu öffnen. Dies mag für private Personenkraftwagen sinnvoll sein, im Bereich der Baumaschinen ist eine solche individuelle mechanische Kodierung von Schlüsseln hinderlich.

Aus diesem Grunde sind Baumaschinen mit einheitlichen Schließsystemen ausgestattet, derart, dass die Schlüssel einer ersten Baumaschine dazu verwendet werden können, eine zweite, andere Baumaschine mechanisch zu öffnen bzw. zu starten. Dies ist insbesondere auf Baustellen oder in Lagern von Vorteil, da jeder Arbeiter eine jede Baumaschine mit seinem Schlüssel öffnen und bewegen kann. Aus versicherungstechnischen Gründen ist es jedoch äußerst problematisch, da beim Diebstahl einer Baumaschine oder bei einer Beschädigung einer Baumaschine im Zweifel nicht mehr nachvollzogen werden kann, wer zuletzt dieses Kraftfahrzeug geöffnet und bewegt hat.

Aus diesem Grunde lag dem Gegenstand die Aufgabe zugrunde eine Baumaschine mit einem system als auch, ein Verfahren zur Verfügung zu stellen, welches den Zugriff auf Baumaschinen mit einheitlichen mechanischen Schließsystemen sicherer macht.

Diese Aufgabe wird gemäß eines Aspekts durch eine Baumaschine mit einem System zur Kontrolle einer Zugriffsberechtigung gelöst, welches umfasst eine Mehrzahl von jeweils für den Zugriff auf zumindest zwei verschiedene Baumaschinen eingerichtete Schlüssel mit einer einheitlichen mechanischen Kodierung, wobei jeder der Schlüssel zusätzlich zu der mechanischen Kodierung eine über einen eingebauten Transponder auslesbare eindeutige Identifizierungskennung aufweist, ein jeweils genau einer Baumaschine zugeordneten Hauptschlüssel derart, dass die auslesbare Identifizierungskennung des Hauptschlüssels genau einer Baumaschine fest zugeordnet ist, wobei eine eindeutige Identifizierungskennung eines der Baumaschine nicht zugeordneten Schlüssels mit Hilfe des Hauptschlüssels der Baumaschine der Baumaschine durch ein Anlernen zuordenbar ist, und wobei die Baumaschine eine mit Hilfe einer zugeordneten Identifizierungskennung eines Schlüssels freigebbare Wegfahrsperre aufweist.

Es ist erkannt worden, dass auch im Bereich der Baumaschinen, beispielsweise Bagger, Kräne, Landmaschinen, Traktoren, Gabelstapler, Mähdrescher, Rasenmäher und dergleichen, welche über einheitliche mechanische Schließsysteme verfügen, der Zugriff auf die Baumaschinen gesichert werden muss.

Bei dem gegenständlichen System sind eine Mehrzahl von Schlüsseln vorhanden, welche eine einheitliche mechanische Kodierung aufweisen, so dass mit dieser einheitlichen mechanischen Kodierung eine Mehrzahl von Schließsystemen von unterschiedlichen Baumaschinen mechanisch öffenbar sind. Insbesondere Baumaschinen einer Baumaschinenflotte eines bestimmten Herstellers weisen einheitliche Schließsysteme auf, zu denen einheitliche Schlüssel passen. Bei diesen Systemen kann mit jedem Schlüssel jede Baumaschine der Flotte mechanisch geöffnet und gestartet werden.

Um die Sicherheit zu erhöhen, wird nun vorgeschlagen, dass jeder der Schlüssel zusätzlich zu der mechanischen Kodierung einen eingebauten Transponder aufweist. Der eingebaute Transponder verfügt über Sende- und Empfangsmittel, beispielsweise eine Antenne und eine Sende- und Empfangslogik, um mittels eines Hochfrequenzfeldes aktiviert zu werden und beim Empfang des Hochfrequenzfeldes auf einer zweiten Frequenz auf dem Transponder gespeicherte Daten oder von dem Transponder empfangene und in dem Transponder verarbeitete, kodierte und/oder verschlüsselte Daten auszusenden. Eine eindeutige Identifizierungskennung kann eine Ziffernfolge oder eine Zeichenfolge sein, welche in einem nicht flüchtigen Speicher des Transponders gespeichert ist. Die eindeutige Identifizierungskennung kann beispielsweise derart in dem Transponder gespeichert sein, dass derart aus dem Transponder auslesbar ist, dass sie beim Aussenden über ein elektromagnetisches Feld zunächst in dem Transponder verschlüsselt wird. Somit wird sichergestellt, dass die eindeutige Identifizierungskennung des Transponders nicht unverschlüsselt auf einem Hochfrequenzfeld ausgesendet wird.

Unter den Schlüsseln sind auch Hauptschlüssel vorhanden. Solche Hauptschlüssel sind eindeutig einer Baumaschine zugeordnet. Diese eindeutige Zuordnung der Hauptschlüssel zu einer Baumaschine erfolgt beispielsweise, dadurch, dass die auslesbare Identifizierungskennung des Hauptschlüssels in dem diesem Hauptschlüssel zugeordnete Baumaschine fest eingespeichert ist. Somit kann die Baumaschine überprüfen, ob der Schlüssel bzw. die Identifizierungskennung des entsprechenden Schlüssels, welcher sich in der Funkreichweite der Baumaschine befindet, ein Hauptschlüssel ist, oder eben nicht. Mit Hilfe des Hauptschlüssels kann eine Baumaschine stets gestartet werden, da die Identifizierungskennung des Hauptschlüssels stets dazu geeignet sein kann, die Wegfahrsperre freizugeben, indem diese Identifizierungskennung von der Baumaschine mittels eines Hochfrequenzfeldes ausgelesen wird und die Wegfahrsperre daraufhin, d.h. bei einem positiven Vergleichsergebnis der ausgelesenen Identifizierungskennung mit der gespeicherten Identifizierungskennung, freigegeben wird.

Um nun zu erreichen, dass neben dem Hauptschlüssel ein weiterer Schlüssel berechtigt ist, die Baumaschine zu aktivieren und die Wegfahrsperre freizugeben, wird vorgeschlagen, dass eine eindeutige Identifizierungskennung eines in der Baumaschine nicht zugeordneten Schlüssels in der Baumaschine zuordenbar ist, und zwar mit Hilfe des Hauptschlüssels. So kann es sein, dass ein Hauptschlüssel notwendig ist, um die Zuordnung des noch nicht zugeordneten Schlüssels zu dem Fahrzeug vorzunehmen. Hierzu kann ein Anlernvorgang mittels des Hauptschlüssels gestartet werden, im Verlaufe des Anlernvorgangs kann die Identifizierungskennung des noch nicht zugeordneten Schlüssels ausgelesen und in der Baumaschine gespeichert werden und abschließend kann das Anlernen, beispielsweise erneut durch Verwendung des Hauptschlüssels, beendet werden.

Nachdem ein Schlüssel angelernt wurde, ist dessen Identifizierungskennung in der Baumaschine gespeichert und somit kann mit Hilfe dieses Schlüssels die Wegfahrsperre freigegeben werden. Dies kann dadurch erfolgen, dass die Identifizierungskennung des angelernten Schlüssels von der Baumaschine ausgelesen wird, mit Identifizierungskennungen, welche in der Baumaschine gespeichert sind, verglichen wird und bei einem positiven Vergleichsergebnis die Wegfahrsperre freigegeben wird.

Mit Hilfe des gegenständlichen Systems ist es nun möglich, verschiedenste Schlüssel an eine Baumaschine anzulernen. Das Anlernen kann jedoch gegenständlich nur mit Hilfe eines Hauptschlüssels erfolgen, so dass stets eine Kontrolle darüber besteht, welche Schlüssel berechtigt sind, eine Baumaschine zu aktivieren und welche nicht. So kann mit einem restriktiven Umgang eine zu große Verbreitung der Zugriffsberechtigung von verschiedenen Schlüsseln auf die Baumaschine verhindert werden.

Gemäß einem Ausführungsbeispiel wird vorgeschlagen, dass die Baumaschine eine Lese-/Schreibeinrichtung zum Auslesen und/oder Aussenden einer Identifizierungskennung aufweist. Eine Lese-/Schreibeinrichtung kann hierbei mit Sendemitteln ausgestattet sein, wie beispielsweise Antennen und Hochfrequenzeinheiten, um Hochfrequenzfelder auszusenden und zu empfangen. Andere elektromagnetische Felder können ebenfalls ausgesendet und empfangen werden. Darüber hinaus kann die Lese-/Schreibeinrichtung eine Logik aufweisen, welche das Aussenden und Empfangen von bestimmten Signalen mittels der elektromagnetischen Felder steuert. So kann beispielsweise mittels der Lese-/Schreibeinrichtung zunächst ein Abfragefeld ausgesendet werden. Nähert sich ein Schlüssel nun einem solchen Abfragefeld und gelangt in das Abfragefeld hinein, so kann das Abfragefeld den Transponder des Schlüssels aktivieren.

Hieraufhin kann der Transponder die Identifizierungskennung verschlüsselt oder unverschlüsselt über ein Antwortfeld aussenden. Das Antwortfeld kann beispielsweise eine andere Frequenz haben, als das Abfragefeld. Das Antwortfeld kann über die Lese-/Schreineinrichtung empfangen und ausgewertet werden. Die in dem Antwortfeld enthaltene Identifizierungskennung kann mittels der Lese-/Schreibeinrichtung detektiert und einer weiteren Verarbeitung zugeführt werden.

Gemäß einem vorteilhaften Ausführungsbeispiel wird vorgeschlagen, dass die Baumaschine eine Freigabeeinrichtung zum Freigeben der Wegfahrsperre bei einem positiven Vergleich einer gespeicherten Identifizierungskennung mit einer ausgelesenen Identifizierungskennung aufweist. So kann mittels der Freigabeeinrichtung beispielsweise eine empfangene Identifizierungskennung weiterverarbeitet werden, in dem sie mit gespeicherten Identifizierungskennungen verglichen wird. Stimmen die Identifizierungskennungen überein, so kann ein positives Vergleichsergebnis zu einer Freigabe der Wegfahrsperre führen.

Gemäß einem vorteilhaften Ausführungsbeispiel wird vorgeschlagen, dass die Baumaschine eine Speichereinrichtung zum Speichern einer ausgelesenen Identifizierungskennung aufweist. Identifizierungskennungen, die von Schlüsseln ausgelesen werden, und beim Anlernen dem Fahrzeug zugeordnet werden sollen, müssen in der Baumaschine gespeichert werden. Aus diesem Grunde ist die Speichereinrichtung vorgesehen, mit welcher die ausgelesenen Identifizierungskennungen während des Anlernens gespeichert werden können. Somit kann sichergestellt werden, dass Identifizierungskennungen, die an die Baumaschine angelernt werden, in der Speichereinrichtung gespeichert sind.

Gemäß einem vorteilhaften Ausführungsbeispiel wird vorgeschlagen, dass die Baumaschine eine Kontrolleinrichtung zum zeitlich gesteuerten Löschen oder Deaktivieren einer in der Speichereinrichtung gespeicherten Identifizierungskennung aufweist. Ein Anlernen eines Schlüssels an eine Baumaschine kann somit zeitlich begrenzt sein. So ist es beispielsweise möglich, dass für die Laufzeit einer Stunde, eines Tages oder eines anderen Zeitraums ein Schlüssel auf eine Baumaschine zugreifen darf, nach Ablauf dieses Zeitraums aber nicht mehr. Aus diesem Grunde überwacht die Kontrolleinrichtung die gespeicherten Identifizierungskennungen und kann diese zeitlich gesteuert löschen oder deaktivieren. Beim Deaktivieren wird ein Marker der gespeicherten Identifizierungskennung zugeordnet, der aussagt, dass diese Identifizierungskennung nicht mehr für die Freigabe verwendet werden kann. Ein solcher Marker kann von der Freigabeeinrichtung stets vor der Freigabe der Wegfahrsperre überprüft werden. Durch das Deaktivieren wird sichergestellt, dass einmal angelernte Identifizierungskennungen in dem Speicher verbleiben und beispielsweise im Falle eines Versicherungsschadens ausgelesen werden können. Somit kann festgestellt werden, welche Schlüssel Zugriff auf eine Baumaschine hatten.

Gemäß einem vorteilhaften Ausführungsbeispiel wird vorgeschlagen, dass die mechanische Kodierung zumindest ein Schlüsselbart ist. Ein solcher einheitlicher Schlüsselbart ist geeignet, Schlösser eines einheitlichen Schließsystems zu öffnen.

Gemäß einem vorteilhaften Ausführungsbeispiel wird vorgeschlagen, dass der Transponder ein RFID Transponder ist. Ein solcher Transponder beinhaltet zumindest eine eindeutige Identifizierungskennung, welche mittels eines Abfragefeldes auslesbar ist.

Gemäß einem vorteilhaften Ausführungsbeispiel wird vorgeschlagen, dass der Transponder passiv ist. Ein passiver Transponder zeichnet sich dadurch aus, dass er seine Energie zum Aussenden der Identifizierungskennung ausschließlich aus dem Abfragefeld bezieht. Eine Batterie oder ein sonstiger Energiespeicher in dem Transponder kann somit entfallen.

Gemäß einem vorteilhaften Ausführungsbeispiel wird vorgeschlagen, dass der Transponder des Hauptschlüssels einen Speicher aufweist. Somit ist in dem Hauptschlüssel ein Speicher vorhanden, in dem neben der Identifizierungskennung des Hauptschlüssels weitere Daten gespeichert werden können. Aus diesem Grunde wird vorgeschlagen, dass der Speicher des Hauptschlüssels zum Speichern einer Identifizierungskennung zumindest eines der Baumaschine des Hauptschlüssels zugeordneten Schlüssels gebildet ist. Der Speicher muss nicht zwingend in dem Transponder des Hauptschlüssels angeordnet sein, sondern kann auch an einer anderen Stelle innerhalb des Hauptschlüssels angeordnet sein. In dem Speicher des Hauptschlüssels können Identifizierungskennungen gespeichert werden, die von Schlüsseln stammen, die mit Hilfe des Hauptschlüssels an ein Fahrzeug angelernt wurden. Wird ein Fahrzeug gestohlen, kann der Hauptschlüssel bzw. der Speicher des Hauptschlüssels ausgelesen werden und es kann festgestellt werden, welche Schlüssel an das Fahrzeug des Hauptschlüssels angelernt waren. Somit kann nachvollzogen werden, wer potenziell Zugriff auf das Fahrzeug hatte. Dies ist aus versicherungstechnischen Gründen vorteilhaft.

Um dem Hauptschlüssel die Identifizierungskennung des angelernten Schlüssels mitzuteilen, wird gemäß einem vorteilhaften Ausführungsbeispiel vorgeschlagen, dass die Lese-/Schreibeinrichtung zum Aussenden der Identifizierungskennung eines Schlüssels nach dem Anlernen des Schlüssels an die Baumaschine von der Baumaschine des Hauptschlüssels an den Hauptschlüssel gebildet ist. Somit wird nachdem ein Schlüssel an eine Baumaschine angelernt wurde, die Identifizierungskennung mittels der Lese-/Schreibeinrichtung bevorzugt verschlüsselt ausgesendet und von dem Hauptschlüssel empfangen. In dem Hauptschlüssel kann dann diese Identifizierungskennung gespeichert werden. Auch kann der Hauptschlüssel den Empfang einer solchen Identifizierungskennung gegenüber der Baumaschine bzw. der Lese-/Schreibeinrichtung quittieren und erst danach kann der Anlernvorgang abgeschlossen sein. Dies stellt sicher, dass der Hauptschlüssel auch tatsächlich Kenntnis von der Identifizierungskennung des angelernten Schlüssels hat.

Gemäß einem vorteilhaften Ausführungsbeispiel wird vorgeschlagen, dass die Speichereinrichtung zum Deaktivieren oder Löschen gespeicherter Identifizierungskennungen beim Empfangen der Identifizierungskennung des Hauptschlüssels gebildet ist. Somit kann beispielsweise eine temporäre Berechtigung eines Schlüssels für den Zugriff auf eine Baumaschine gewährleistet sein. Solange der Hauptschlüssel nicht erneut in das Abfragefeld der Lese-/Schreibeinrichtung nach dem Anlernen eines Schlüssels tritt, verbleibt der Schlüssel in dem Speicher und ist geeignet, die Wegfahrsperre freizugeben. Sobald jedoch der Hauptschlüssel sich in das Abfragefeld begibt, und dessen Identifizierungskennung von der Lese-/Schreibeinrichtung ausgelesen wurde, kann die Berechtigung der anderen Schlüssel entfallen, was durch Deaktivierung und Löschung der Identifizierungskennungen der angelernten Schlüssel erfolgen kann.

Gemäß einem vorteilhaften Ausführungsbeispiel wird vorgeschlagen, dass der Transponder und die Lese-/Schreibeinrichtung Verschlüsselungsmittel zum bevorzugt symmetrischen Verschlüsseln von übertragenen Daten aufweisen. Somit wird sichergestellt, dass die Kommunikation zwischen dem Transponder und der Lese-/Schreibeinrichtung gesichert erfolgt. Für diese Kommunikation kann beispielsweise während des Anlernens ein privater Schlüssel von der Lese-/Schreibeinrichtung an den Transponder eines Schlüssels übermittelt werden und dieser private Schlüssel kann für die darauffolgende Kommunikation zwischen dem Schlüssel und der Baumaschine bzw. der Lese-/Schreibeinrichtung verwendet werden. Privater Schlüssel kann auch in dem Hauptschlüssel hinterlegt sein, so dass eine Kommunikation zwischen Hauptschlüssel und Lese-/Schreibeinrichtung der entsprechenden Baumaschine stets gesichert ist.

Ein Schlüssel kann sowohl ein Hauptschlüssel sein, als auch ein Schlüssel, welcher an eine andere Baumaschine angelernt werden kann. Es ist jedoch sichergestellt, dass stets ein Hauptschlüssel einer bestimmten Baumaschine zugeordnet ist.

Ein weiterer Aspekt ist ein Verfahren zur Kontrolle einer Zugangsberechtigung für eine Baumaschine umfassend a) Auslesen einer ersten Identifizierungskennung von einem Transponder eines einer Baumaschine fest zugeordneten Hauptschlüssels, b) anschließendes Auslesen einer zweiten Identifizierungskennung von einem Transponder eines einer Baumaschine nicht zugeordneten Schlüssels, wodurch dieser nicht zugeordnete Schlüssels durch Zuordnen der zweiten Identifizierungskennung zu der Baumaschine angelernt wird, und c)Freigeben einer Wegfahrsperre der Baumaschine beim Auslesen einer der Baumaschine zugeordneten Identifizierungskennung von einem Transponder eines Schlüssels, wobei die Schlüssel für den Zugriff auf zumindest zwei verschiedene Baumaschinen eingerichtete einheitliche mechanische Kodierungen aufweisen.

Somit wird vorgeschlagen, dass zunächst die Identifizierungskennung eines Hauptschlüssels ausgelesen wird. Nachdem die Identifizierungskennung eines Hauptschlüssel ausgelesen wurde, und Baumaschinenseitig überprüft wurde, ob diese Identifizierungskennung tatsächlich von dem der Baumaschine zugeordneten Hauptschlüssel stammt, kann anschließend eine zweite Identifizierungskennung von einem Transponder eines einer Baumaschine nicht zugeordneten Schlüssels ausgelesen werden. Dieses anschließende Auslesen kann beispielsweise innerhalb eines Zeitraums von 30 Sekunden oder eines anderen beliebigen Zeitraums möglich sein, nachdem die Identifizierungskennung des Hauptschlüssels ausgelesen wurde. Beim Auslesen der zweiten Identifizierungskennung kann dieser nicht zugeordnete Schlüssel der Baumaschine zugeordnet werden. Nachdem der Schlüssel zugeordnet wurde, kann mit Hilfe der Identifizierungskennung dieses Schlüssels die Wegfahrsperre der Baumaschine freigegeben werden.

Gemäß einem vorteilhaften Ausführungsbeispiels wird vorgeschlagen, dass im Anschluss an Schritt b) in einem Schritt b1) die ausgelesene Identifizierungskennung von der Baumaschine an den Hauptschlüssel übertragen wird und in dem Hauptschlüssel gespeichert wird. Somit wird, nachdem die Identifizierungskennung des nicht angelernten Schlüssels ausgelesen wurde, diese nicht nur in der Baumaschine gespeichert, sondern auch von der Baumaschine an den Hauptschlüssel übertragen und kann in dem Hauptschlüssel gespeichert werden. Das Übertragen und Speichern der ausgelesenen Identifizierungskennung an den Hauptschlüssel kann beispielsweise von dem Hauptschlüssel quittiert werden und erst daraufhin kann fahrzeugseitig die Identifizierungskennung gespeichert werden und der Anlernprozess beendet werden. Somit wird sichergestellt, dass in dem Hauptschlüssel stets die Identifizierungskennungen gespeichert sind, die von Schlüsseln stammen, die an ein Fahrzeug angelernt wurden.

Auch wird vorgeschlagen, dass nach Schritt b) oder Schritt b1) beim Zuordnen des Schlüssels zu dem Fahrzeug zumindest die Identifizierungskennung des Schlüssels in der Baumaschine gespeichert wird. Somit wird durch das Zuordnen die Identifizierungskennung in der Baumaschine gespeichert und bei einem späteren Zugriff auf das Fahrzeug kann die Identifizierungskennung, die von einem Schlüssel ausgelesen wurde, mit gespeicherten Identifizierungskennungen verglichen werden und eine Freigabe nur bei einem positiven Vergleichsergebnis erfolgen.

Gemäß einem vorteilhaften Ausführungsbeispiel wird vorgeschlagen, dass nach Schritt b) oder Schritt b1) ein Kryptoschlüssel von der Baumaschine an den Schlüssel übertragen wird und dass der Kryptoschlüssel für eine verschlüsselte Kommunikation zwischen der Baumaschine und dem Schlüssel für die Freigabe der Wegfahrsperre verwendet wird. Der Kryptoschlüssel kann beispielsweise ein privater Schlüssel sein. Der Kryptoschlüssel kann dazu verwendet werden, die Daten, die zwischen Baumaschine und Schlüssel ausgetauscht werden, zu verschlüsseln. Dies kann eine symmetrische Verschlüsselung sein.

Gemäß einem vorteilhaften Ausführungsbeispiel wird vorgeschlagen, dass, falls eine Identifizierungskennung von einem Hauptschlüssel ausgelesen wird, zumindest eine Zuordnung einer Identifizierungskennung zu einer Baumaschine deaktiviert oder gelöscht wird. Beispielsweise ist es möglich, dass nach dem Anlernen der angelernte Schlüssel solange berechtigt ist, die Wegfahrsperre freizugeben, bis der Hauptschlüssel sich erneut der Baumaschine nähert und dessen Identifizierungskennung ausgelesen wird. Somit kann beispielsweise ein Vorarbeiter einen Mitarbeiter dazu berechtigen, eine Baumaschine zu benutzen, solange er nicht zugegen ist. Sobald der Vorarbeiter jedoch wieder die Baumaschine betritt, wird die Identifizierungskennung des Hauptschlüssels ausgelesen und bestehende Zuordnungen zu anderen Identifizierungskennungen können deaktiviert oder gelöscht werden. Das gleiche kann in diesem Fall auch im Hauptschlüssel erfolgen, dass heißt, dass dort gespeicherte Identifizierungskennungen ebenfalls deaktiviert oder gelöscht werden können.

Gemäß einem vorteilhaften Ausführungsbeispiel wird vorgeschlagen, dass eine Zuordnung einer Identifizierungskennung zeitlich limitiert ist. Eine zeitliche Limitierung kann beispielsweise dadurch erfolgen, dass die gespeicherten Identifizierungskennungen nach Ablauf einer vorbestimmten Zeit deaktiviert oder gelöscht werden.

Nachfolgend wird der Gegenstand anhand einer Ausführungsbeispiele zeigenden Zeichnung näher erläutert. In der Zeichnung zeigen:
- Fig. 1: ein System gemäß einem vorteilhaften Ausführungsbeispiel;
- Fig. 2: ein erstes Ablaufdiagramm gemäß einem vorteilhaften Ausführungsbeispiel;
- Fig. 3: ein zweiten Ablaufdiagramm gemäß einem vorteilhaften Ausführungsbeispiels.

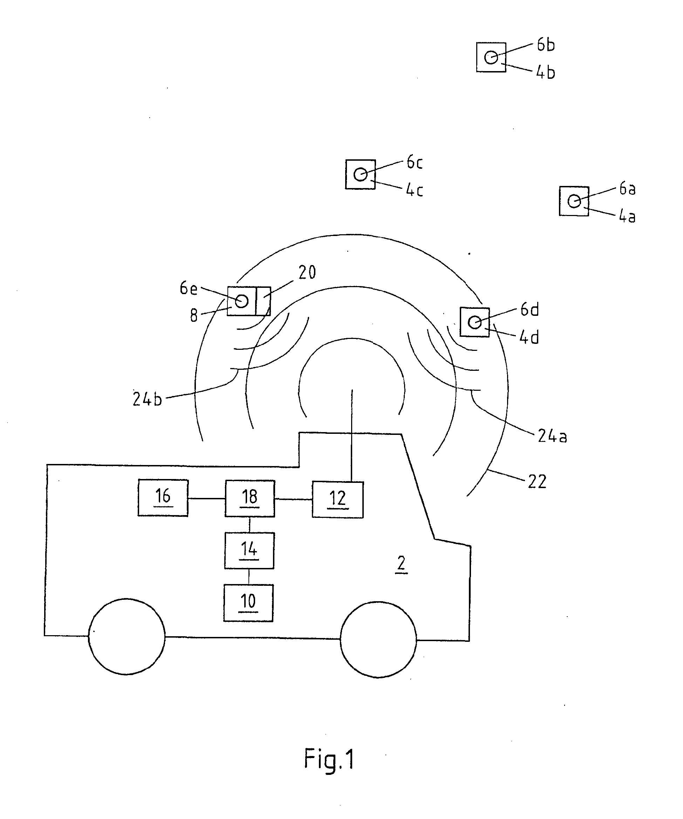

Fig. 1 zeigt eine Baumaschine, z.B. ein Gabelstapler, ein Bagger, ein Kran, ein Rasenmäher, ein Mähdrescher, ein Traktor oder dergleichen.

Darüber hinaus zeigt Fig. 1 eine Mehrzahl von Schlüsseln 4a-d, welche einheitliche mechanische Kodierungen in Form von einheitlichen Schlüsselbärten (nicht gezeigt) aufweisen. In den Schlüsseln 4a-d eingebaut sind passive Transponder 6a-d.

Darüber hinaus zeigt Fig. 1 einen Hauptschlüssel 8. Der Hauptschlüssel 8 weist ebenfalls einen Transponder 6e auf. Der Hauptschlüssel 8 unterscheidet sich äußerlich von den Schlüsseln 4 nicht. Die mechanische Kodierung für das mechanische Schließsystem, beispielsweise in Form eines Schlüsselbartes, ist bei allen Schlüsseln 4, 8 identisch. Der Hauptschlüssel 8 weist einen Speicher 20 auf, welcher jedoch ebenfalls bei den Schlüsseln 4a-d vorhanden sein kann. Der Hauptschlüssel 8 kann sich von den Schlüsseln 4a-d lediglich in der in dem Transponder 6e gespeicherten Identifizierungskennung unterscheiden. Die in den Transpondern 6 gespeicherten Identifizierungskennungen sind eindeutig, so dass keine zwei Identifizierungskennungen von Schlüsseln 4, 8 einander gleich sind.

Die Baumaschine 2 weist eine Wegfahrsperre 10 auf. Über die Wegfahrsperre 10 kann die Aktivierung des Motors des Kraftfahrzeugs 2 blockiert bzw. bei einer Freigabe der Wegfahrsperre 10 freigegeben werden. Die Wegfahrsperre 10 ist mit einer Freigabeeinrichtung 14 verbunden. Die Freigabeeinrichtung steuert die Wegfahrsperre 10 in Abhängigkeit von Signalen der ebenfalls in der Baumaschine angeordneten Kontrolleinrichtung 18. Die Kontrolleinrichtung 18 steuert sowohl die Freigabeeinrichtung 14, als auch die Sende-/Empfangseinrichtung 12 sowie die Speichereinrichtung 16. In der Speichereinrichtung 16 können Identifizierungskennungen von Schlüsseln 4 und 8 gespeichert sein. In der Speichereinrichtung 16 ist insbesondere die von dem Hauptschlüssel 8 stammende Identifizierungskennung fest gespeichert, so dass der Hauptschlüssel 8 der Baumaschine 2 fest zugeordnet ist. Darüber hinaus können in der Speichereinrichtung 16 weitere Identifizierungskennungen von den Schlüsseln 4 gespeichert werden.

Die Kontrolleinrichtung 18 steuert das Speichern und Löschen sowie Deaktivieren von in der Speichereinrichtung gespeicherten Identifizierungskennungen. Darüber hinaus steuert die Kontrolleinrichtung 18 die Sende-/Empfangseinrichtung 12, derart, dass die Sende-/Empfangseinrichtung 12 ein Abfragefeld 22 aussenden kann und ein Antwortfeld 24a, 24b von Schlüsseln 4, 8 empfangen kann. Das Abfragefeld ist bevorzugt ein Hochfrequenzfeld und enthält Informationen zuder Baumaschine sowie, falls nötig, weitere Informationen, welche für die Schlüssel 4, 8 von Interesse sein könnten. Die Antwortfelder 24a, 24b enthalten zumindest die Identifizierungskennungen der Schlüssel 4, 8.

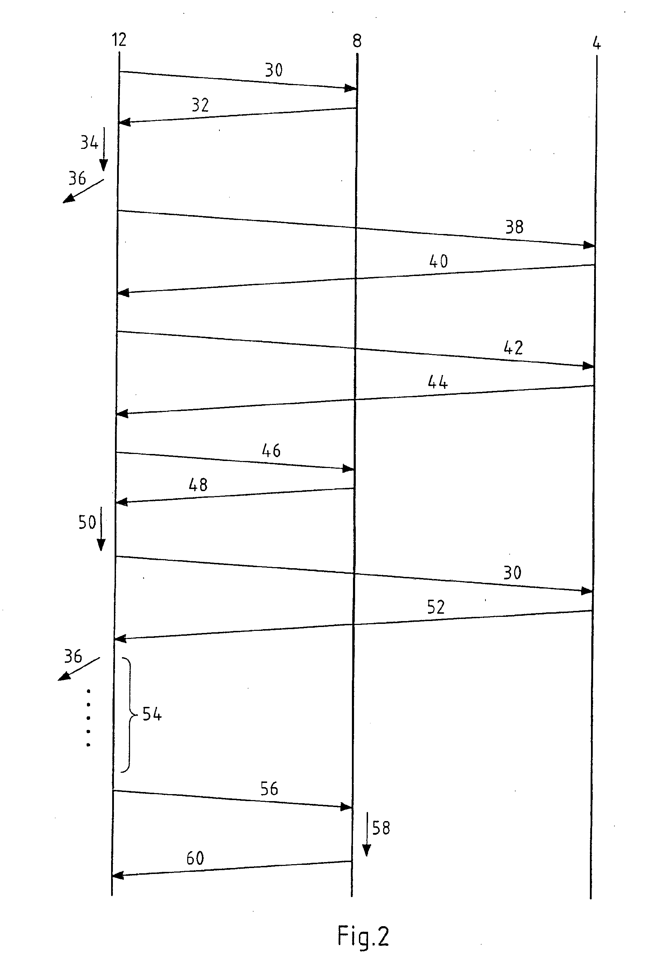

Mit Hilfe des Hauptschlüssels 8 kann ein Schlüssel 4a-d an die Baumaschine 2 angelernt werden, derart, dass mittels des angelernten Schlüssels 4a-d die Freigabeeinrichtung 14, respektive die Wegfahrsperre 10 freigegeben werden kann. Ein Anlernen ist nachfolgend in Fig. 2 dargestellt.

Fig. 2 zeigt einen Ablaufdiagramm eines Verfahrens gemäß einem Ausführungsbeispiel. Die Pfeile stellen Kommunikationswege zwischen der Sende-/Empfangseinrichtung 12, dem Hauptschlüssel 8, bzw. dem im Hauptschlüssel 8 verbauten Transponder 6e und einem Schlüssel 4a-d, respektive den darin verbauten Transpondern 6 dar.

Zunächst sendet die Sende-/Empfangseinrichtung 12 ein Abfragefeld aus (30). Beim Aussenden des Abfragefeldes (30) kann dieses derart kodiert sein, dass es die Anwesenheit eines Hauptschlüssels 8 bzw. eines angelernten Schlüssels 4 "pollt". Das bedeutet, dass die Baumaschine bzw. die Sende-/Empfangseinrichtung 12 laufend abfragt (30), ob ein Schlüssel in der Nähe ist, der eine Identifizierungskennung aussenden kann, die eventuell zur Freigabe der Wegfahrsperre 10 genutzt werden kann.

Der Hauptschlüssel 8, sobald er sich in dem Abfragefeld 22 befindet, reagiert auf das Abfragefeld, indem er, bevorzugt verschlüsselt, seine Identifizierungskennung aussendet (32).

Die von dem Hauptschlüssel 8 ausgesendete Identifizierungskennung wird in der Baumaschine mittels der Sende-/Empfangseinrichtung 12 empfangen und einer Prüfung 34 unterzogen. Während dieser Prüfung 34 wird mittels der Kontrolleinrichtung 18 in dem Speicher 16 überprüft, ob eine identische Identifizierungskennung fest hinterlegt ist. Ist dies der Fall, so erfolgt mittels der Kontrolleinrichtung 18 ein Freigabesignal 36 an die Freigabeeinrichtung 14, welche die Wegfahrsperre 10 freigibt.

Darüber hinaus wird ein zweites Abfragefeld ausgesendet (38). Dieses zweite Abfragefeld kann dazu geeignet sein, Schlüssel 4 zu "pollen". Das bedeutet, dass alle Schlüssel 4, die sich im Abfragefeld 22 befinden und ein entsprechendes Signal empfangen, zunächst in einem Antwortsignal ihre Anwesenheit signalisieren (40). Nach Empfang der Signalisierung (40) des Anwesenheitssignals kann die Baumaschine mittels der Sende-/Empfangseinrichtung 12 einen geheimen Kryptoschlüssel übermitteln (42).

Mit Hilfe dieses Kryptoschlüssels ist die anschließende Kommunikation zwischen dem Schlüssel 4 und der Sende-/Empfangseinrichtung 12 verschlüsselt. Mit Hilfe des empfangenen Kryptoschlüssels verschlüsselt der Schlüssel 4 im Transponder 6 die Identifizierungskennung und versendet diese (44) verschlüsselt zurück an die Baumaschine bzw. die Sende-/Empfangseinrichtung 12. Die Sende-/Empfangseinrichtung 12 übermittelt daraufhin (46) die empfangene, verschlüsselte Identifizierungskennung des Schlüssels 4 an den Hauptschlüssel 8. In dem Hauptschlüssel 8 wird diese Identifizierungskennung gespeichert und ein Bestätigungssignal wird an die Sende-/Empfangseinrichtung zurückgeschickt (48).

Nach Erhalt des Bestätigungssignals wird die empfangene Identifizierungskennung in dem Speicher 16 der Baumaschine 2 gespeichert (50). Daraufhin ist der Anlernvorgang abgeschlossen.

Sendet die Sende-/Empfangseinrichtung beispielsweise erneut ein Abfragefeld aus (30), welches zum Starten der Baumaschine 2 geeignet ist, kann der Schlüssel 4 daraufhin seine Identifizierungskennung verschlüsselt übermitteln (52). Die Identifizierungskennung wird in der Baumaschine empfangen, entschlüsselt und mit in der Speichereinrichtung 16 gespeicherten Identifizierungskennungen verglichen. Bei einem positiven Vergleich steuert die Kontrolleinrichtung 18 die Freigabeeinrichtung 14 (an (36)) derart, dass die Baumaschine 2 gestartet wird bzw. die Wegfahrsperre 10 freigegeben wird.

Nach einem gewissen Zeitablauf 54, beispielsweise ein Tag oder eine Stunde, kann die Kontrolleinrichtung 18 so programmiert sein, dass sie die in der Speichereinrichtung 16 gespeicherte Identifizierungskennung deaktiviert oder löscht. Das führt dazu, dass diese Identifizierungskennung nicht mehr zur Freigabe der Baumaschine 2 verwendet werden kann. Eine solche Information kann anschließend an den Hauptschlüssel 8 übermittelt werden (56). Dies kann beispielsweise dann geschehen, wenn der Hauptschlüssel 8 sich im Abfragefeld befindet. Der Hauptschlüssel 8 kann daraufhin seinerseits in seinem Speicher 20 die gespeicherte Identifizierungskennung löschen (58) und ein Bestätigungssignal an die Baumaschine 2 zurücksenden (60).

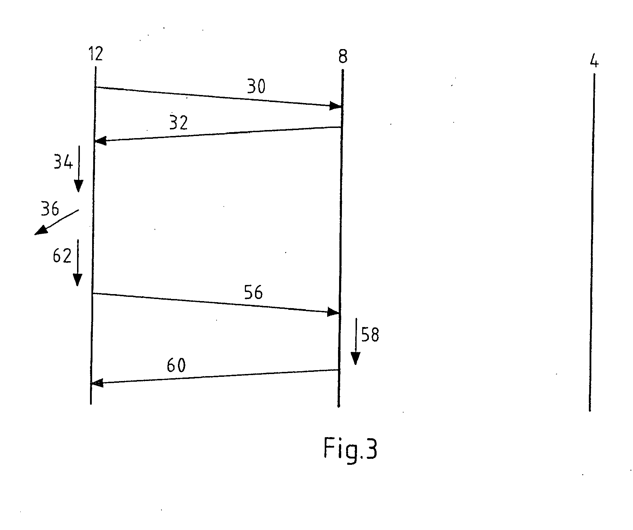

Fig. 3 zeigt einen Ablauf eines Anlern- und Ablernverfahrens, bei dem die Schritte 30 bis 50 identisch zu denen in Fig. 2 sein können. Anders als bei den in Fig. 2 dargestellten Verfahren wird die Identifizierungskennung des Schlüssels nicht nach einem Zeitablauf (54) gelöscht, sondern unmittelbar nachdem ein Hauptschlüssel 8 erneut in das Abfragefeld gelangt ist. So wird beispielsweise, wenn von der Sende-/Empfangseinrichtung das Abfragefeld 22 ausgesendet wird (30) und von dem Hauptschlüssel 8 empfangen wird, von dem Hauptschlüssel in einem Antwortfeld 24a die Identifizierungskennung des Hauptschlüssels 8 übermittelt (32). Dies kann verschlüsselt erfolgen. Empfängt die Sende-/Empfangseinrichtung 12 die Identifizierungskennung des Hauptschlüssels 8, so kann nach einer erfolgreichen Prüfung 34 zum Einen eine Freigabe 36 erfolgen. Zum Anderen kann jedoch auch die Kontrolleinrichtung 18 die Speichereinrichtung 16 anweisen (62), die dort gespeicherten Identifizierungskennungen zu deaktivieren oder zu löschen. Ein solches Löschen kann daraufhin dem Hauptschlüssel 8 signalisiert (56) werden, und entsprechend des Ablaufs in Fig. 2 vom Hauptschlüssel 8 bestätigt werden.

Mit Hilfe des gegenständlichen Verfahrens und des gegenständlichen Systems ist es möglich, Baumaschinen vor Diebstahl zu schützen und gleichzeitig einen einheitlichen, mechanischen Schlüsselbart beizubehalten.

## Patentansprüche

1. Baumaschine (2) mit einem System zur Kontrolle einer Zugriffsberechtigung für die Baumaschine (2) umfassend:
- eine Mehrzahl von jeweils für den Zugriff auf die Baumaschine (2) und zumindest einer weiteren Baumaschine (2) eingerichtete Schlüssel (4, 8) mit einer einheitlichen mechanischen Kodierung, so dass mit dieser einheitlichen mechanischen Kodierung zumindest die zwei verschiedenen Baumaschinen (2) öffnenbar sind,
- wobei jeder der Schlüssel (4,8) zusätzlich zu der mechanischen Kodierung eine über einen eingebauten Transponder (6) auslesbare eindeutige Identifizierungskennung aufweist,
- einen jeweils genau einer Baumaschine (2) zugeordneten Hauptschlüssel (8) derart, dass die auslesbare Identifizierungskennung des Hauptschlüssels (8) genau einer Baumaschine (2) fest zugeordnet ist,
- wobei eine eindeutige Identinzierungskennung eines der Baumaschine (2) nicht zugeordneten Schlüssels (4) mit Hilfe des Hauptschlüssels (8) der Baumaschine (2) durch ein Anlernen zuordenbar ist, und
- wobei die Baumaschine (2) eine mit Hilfe einer zugeordneten Identifizierungskennung eines Schlüssels freigebbare Wegfahrsperre (10) aufweist.

2. Baumaschine (2) nach Anspruch 1, **dadurch gekennzeichnet, dass** die Baumaschine (2) eine Lese-/Schreibeinrichtung (12) zum Auslesen und/oder Aussenden einer Identifizierungskennung aufweist.

3. Baumaschine (2) nach Anspruch 1 oder 2, **dadurch gekennzeichnet, dass** die Baumaschine (2) eine Freigabeeinrichtung (14) zum Freigeben der Wegfahrsperre (10) bei einem positiven Vergleich einer gespeicherten Identifizierungskennung mit einer ausgelesenen Identifizierungskennung aufweist.

4. Baumaschine (2) nach einem der vorangehenden Ansprüche, **dadurch gekennzeichnet, dass** die Baumaschine (2) eine Speichereinrichtung (16) zum Speichern einer ausgelesenen Identifizierungskennung aufweist.

5. Baumaschine (2) nach einem der vorangehenden Ansprüche, **dadurch gekennzeichnet, dass** die Baumaschine (2) eine Kontrolleinrichtung (8) zum zeitlich gesteuerten Löschen oder Deaktivieren einer in der Speichereinrichtung (16) gespeicherten Identifizierungskennung aufweist.

6. Baumaschine (2) nach einem der vorangehenden Ansprüche, **dadurch gekennzeichnet, dass** die mechanische Kodierung zumindest ein Schlüsselbart ist.

7. Baumaschine (2) nach einem der vorangehenden Ansprüche, **dadurch gekennzeichnet, dass** der Transponder ein RFID Transponder (6) ist.

8. Baumaschine (2) nach einem der vorangehenden Ansprüche, **dadurch gekennzeichnet, dass** der Transponder (6) passiv ist.

9. Baumaschine (2) nach einem der vorangehenden Ansprüche, **dadurch gekennzeichnet, dass** der Transponder (6) des Hauptschlüssels (8) einen Speicher (20) aufweist.

10. Baumaschine (2) nach Anspruch 9, **dadurch gekennzeichnet, dass** der Speicher (20) des Hauptschlüssels (8) zum Speichern einer Identifizierungskennung zumindest eines der Baumaschine (2) des Hauptschlüssels (8) zugeordneten Schlüssels (4) gebildet ist.

11. Baumaschine (2) nach Anspruch 2, **dadurch gekennzeichnet, dass** die Lese-/Schreibeinrichtung (12) zum Aussenden der Identifizierungskennung eines Schlüssels (4) nach dem Anlernen des Schlüssels (4) an die Baumaschine (2) von der Baumaschine (2) des Hauptschlüssels (8) an den Hauptschlüssel (8) gebildet ist.

12. Baumaschine (2) nach Anspruch 4, **dadurch gekennzeichnet, dass** die Speichereinrichtung (16) zum Deaktivieren oder Löschen gespeicherter Identifizierungskennungen beim Empfangen der Identifizierungskennung des Hauptschlüssels (8) gebildet ist.

13. Baumaschine (2) nach Anspruch 2, **dadurch gekennzeichnet, dass** der Transponder (6) und die Lese-/Schreibeinrichtung (12) Verschlüsselungsmittel zum symmetrischen Verschlüsseln von übertragenen Daten aufweisen.

14. Verfahren zur Kontrolle einer Zugriffsberechtigung für eine Baumaschinen (2) nach einem der vorherigen Ansprüche umfassend:
a) Auslesen einer ersten Identifizierungskennung von einem Transponder (6) eines der Baumaschine (2) fest zugeordneten Hauptschlüssels (8),
b) anschließendes Auslesen einer zweiten Identifizierungskennung von einem Transponder (6) eines der Baumaschine (2) nicht zugeordneten Schlüssels (4), wodurch dieser nicht zugeordnete Schlüssels (4) durch Zuordnen der zweiten Identinzierungskennung zu der Baumaschine (2) angelernt wird, und
c) Freigeben einer Wegfahrsperre (10) der Baumaschine (2) beim Auslesen einer der Baumaschine (2) zugeordneten Identifizierungskennung von einem Transponder (6) eines Schlüssels (4,8),
wobei die Schlüssel (4,8) für den Zugriff auf zumindest auf die Baumaschine (2) und mindestens einer weiteren Baumaschine (2) eingerichtete einheitliche mechanische Kodierungen aufweisen, so dass mit dieser einheitlichen mechanischen Kodierung zumindest die zwei verschiedenen Baumaschinen öffnenbar sind.

15. Verfahren nach Anspruch 14, **dadurch gekennzeichnet, dass** im Anschluss an Schritt b) in einem Schritt b1) die ausgelesene Identifizierungskennung von der Baumaschine (2) an den Hauptschlüssel (8) übertragen wird und in dem Hauptschlüssel (8) gespeichert wird.

16. Verfahren nach Anspruch 14 oder 15, **dadurch gekennzeichnet, dass** nach Schritt b) oder Schritt b1) beim Zuordnen des Schlüssels (4) zu der Baumaschine (2) zumindest die Identifizierungskennung des Schlüssels (4) in der Baumaschine (2) gespeichert wird.

17. Verfahren nach einem der Ansprüche 14 bis 16, **dadurch gekennzeichnet, dass** nach Schritt b) oder Schritt b1) ein Kryptoschlüssel von der Baumaschine (2) an den Schlüssel (4) übertragen wird und dass der Kryptoschlüssel für eine verschlüsselte Kommunikation zwischen der Baumaschine (2) und dem Schlüssel (4) für die Freigabe der Wegfahrsperre (10) verwendet wird.

18. Verfahren nach einem der vorangehenden Ansprüche 14 bis 17, **dadurch gekennzeichnet, dass**, falls eine Identifizierungskennung von einem Hauptschlüssel (8) ausgelesen wird, zumindest eine Zuordnung einer Identifizierungskennung zu einer Baumaschine (2) deaktiviert oder gelöscht wird.

19. Verfahren nach einem der vorangehenden Ansprüche 14 bis 18, **dadurch gekennzeichnet, dass** eine Zuordnung einer Identifizierungskennung zeitlich limitiert ist.

## Claims

1. A construction machine (2) with a system for controlling an access authorisation for the construction machine (2) comprising:
- a plurality of keys (4, 8) respectively adapted for access to the construction machine (2) and to at least one further construction machine (2) with a uniform mechanical coding so that this uniform mechanical coding can be used to open at least two different construction machines (2),
- wherein each of the keys (4,8), in addition to the mechanical coding, comprises a unique identification code which can be read out via a built-in transponder (6),
- a master key (8) assigned exactly to respectively one construction machine (2) such that the readable identification code of the master key (8) is firmly assigned to exactly one construction machine (2),
- wherein a unique identification code of a key (4) not assigned to the construction machine (2) can be assigned to the construction machine (2) through teaching with the aid of the master key (8), and
- wherein the construction machine (2) comprises an immobiliser (10) which can be released with the aid of an assigned identification code of the key.

2. The construction machine (2) according to claim 1, **characterised in that** the construction machine (2) comprises a read/write means (12) for reading and/or sending an identification code.

3. The construction machine (2) according to claim 1 or 2, **characterised in that** the construction machine (2) comprises a releasing means (14) for releasing the immobiliser (10), if a comparison of a stored identification code with a read-out identification code is positive.

4. The construction machine (2) according to one of the preceding claims **characterised in that** the construction machine (2) comprises a memory means (16) for storing a read-out identification code.

5. The construction machine (2) according to one of the preceding claims **characterised in that** the construction machine (2) comprises a control means (8) for controlled deletion or deactivation over time of an identification code stored in the memory means (16).

6. The construction machine (2) according to one of the preceding claims **characterised in that** the mechanical coding is at least a key bit.

7. The construction machine (2) according to one of the preceding claims **characterised in that** the transponder is a RFID transponder (6).

8. The construction machine (2) according to one of the preceding claims **characterised in that** the transponder (6) is passive.

9. The construction machine (2) according to one of the preceding claims **characterised in that** the transponder (6) of the master key (8) comprises a memory (20).

10. The construction machine (2) according to claim 9, **characterised in that** the memory (20) of the master key (8) is formed for storing an identification code of at least one key (4) assigned to the construction machine (2) of the master key (8).

11. The construction machine (2) according to claim 2, **characterised in that** the read/write means (12) for sending the identification code of a key (4) after teaching the key (4) to the construction machine (2) is formed by the construction machine (2) of the master key (8) onto the master key (8).

12. The construction machine (2) according to claim 4, **characterised in that** the memory means (16) for deactivating or deleting stored identification codes is formed on receipt of the identification code of the master key (8).

13. The construction machine (2) according to claim 2, **characterised in that** the transponder (6) and the read/write means (12) comprise encryption means for symmetrically encrypting transmitted data.

14. A method for controlling an access authorisation for a construction machine (2) according to one of the preceding claims, comprising:
a) reading a first identification code from a transponder of a master key (8) firmly assigned to the construction machine (2),
b) subsequently reading a second identification code from a transponder (6) of a key (4) not assigned to the construction machine (2), wherein this non-assigned key (4) is taught through assigning the second identification code to the construction machine (2), and
c) releasing an immobiliser (10) of the construction machine (2) when reading an identification code assigned to a construction machine (2) from a transponder (6) of a key (4,8),
wherein the keys (4,8) comprise uniform mechanical codings adapted for access to at least the construction machine (2) and at least one further construction machine (2), so that this uniform mechanical coding can be used to at least open the two different construction machines.

15. The method according to claim 14, **characterised in that** following step b) the read-out identification code is transmitted in a step b1) from the construction machine (2) to the master key (8) and is stored in the master key (8).

16. The method according to claim 14 or 15, **characterised in that** following step b) or step b1) during assigning of the key (4) to the construction machine (2), at least the identification code of the key (4) is stored in the construction machine (2).

17. The method according to one of claims 14 to 16, **characterised in that** following step b) or step b1) a crypto-key is transmitted from the construction machine (2) to the key (4) and **in that** the crypto-key is used for an encrypted communication between the construction machine (2) and the key (4) for the release of the immobiliser (10).

18. The method according to one of preceding claims 14 to 17, **characterised in that** in case an identification code is read out from a master key (8), at least one assignment of an identification code to a construction machine (2) is deactivated or deleted.

19. The method according to one of the preceding claims 14 to 18, **characterised in that** an assignment of an identification code is limited in terms of time.

## Revendications

1. Machine de chantier (2) avec un système pour le contrôle d'une autorisation d'accès pour la machine de chantier (2), comprenant :
- une pluralité de clés (4,8) étudiées respectivement pour l'accès à la machine de chantier (2) et à au moins une autre machine de chantier (2) avec un codage mécanique uniforme, de sorte qu'avec ce codage mécanique uniforme, il est possible d'ouvrir au moins les deux différentes machines de chantier (2),
- chacune des clés (4,8) présentent, en plus du codage mécanique, un critère d'identification univoque lisible par l'intermédiaire d'un transpondeur (6) intégré,
- une clé principale (8) respectivement associée très précisément à une machine de chantier (2) de manière à ce que le critère d'identification lisible de la clé principale (8) soit associé de manière fixe à très précisément une machine de chantier (2),
- un critère d'identification univoque d'une clé (4) non associée à la machine de chantier (2) pouvant être associé à la machine de chantier (2) à l'aide de la clé principale (8) grâce à une programmation, et
- la machine de chantier (2) présentant un dispositif antidémarrage (10) pouvant être débloqué à l'aide d'un critère d'identification associé d'une clé.

2. Machine de chantier (2) selon la revendication 1, **caractérisée en ce que** la machine de chantier (2) présente un dispositif de lecture/écriture (10) pour la lecture et/ou l'envoi d'un critère d'identification.

3. Machine de chantier (2) selon la revendication 1 ou 2, **caractérisée en ce que** la machine de chantier (2) présente un dispositif de déblocage (14) pour débloquer le dispositif antidémarrage (10) lors d'une comparaison positive entre un critère d'identification mis en mémoire et un critère d'identification lu.

4. Machine de chantier (2) selon l'une des revendications précédentes, **caractérisée en ce que** la machine de chantier (2) présente un dispositif de mémoire (16) pour la mise en mémoire d'un critère d'identification lu.

5. Machine de chantier (2) selon l'une des revendications précédentes, **caractérisée en ce que** la machine de chantier (2) présente un dispositif de contrôle (8) pour la suppression ou désactivation commandée dans le temps d'un critère d'identification mis en mémoire dans le dispositif de mémoire (16).

6. Machine de chantier (2) selon l'une des revendications précédentes, **caractérisée en ce que** le codage mécanique est au moins un panneton.

7. Machine de chantier (2) selon l'une des revendications précédentes, **caractérisée en ce que** le transpondeur est un transpondeur RFID (6).

8. Machine de chantier (2) selon l'une des revendications précédentes, **caractérisée en ce que** le transpondeur (6) est passif.

9. Machine de chantier (2) selon l'une des revendications précédentes, **caractérisée en ce que** le transpondeur (6) de la clé principale (8) présente une mémoire (20).

10. Machine de chantier (2) selon la revendication 9, **caractérisée en ce que** la mémoire (20) de la clé principale (8) est réalisée pour la mise en mémoire d'un critère d'identification d'au moins une clé (4) associée à la machine de chantier (2) de la clé principale (8).

11. Machine de chantier (2) selon la revendication 2, **caractérisée en ce que** le dispositif de lecture/écriture (12) est réalisé pour l'envoi du critère d'identification d'une clé (4), après la programmation de la clé (4) pour la machine de chantier (2), de la machine de chantier (2) de la clé principale (8) à la clé principale (8).

12. Machine de chantier (2) selon la revendication 4, **caractérisée en ce que** le dispositif de mémoire (16) est réalisé pour la désactivation ou suppression de critères d'identification mis en mémoire lors de la réception du critère d'identification de la clé principale (8).

13. Machine de chantier (2) selon la revendication 2, **caractérisée en ce que** le transpondeur (6) et le dispositif de lecture/écriture (12) présentent des moyens de codage pour le codage symétrique de données transmises.

14. Procédé pour contrôler une autorisation d'accès pour une machine de chantier (2) selon l'une des revendications précédentes, comprenant :
a) la lecture d'un premier critère d'identification à partir d'un transpondeur (6) d'une clé principale (8) associée de manière fixe à la machine de chantier (2),
b) la lecture qui s'en suit d'un deuxième critère d'identification à partir d'un transpondeur (6) d'une clé (4) non associée à la machine de chantier (2), moyennant quoi cette clé (4) non associée est programmée par association du deuxième critère d'identification à la machine de chantier (2), et
c) déblocage d'un dispositif antidémarrage (10) de la machine de chantier (2) lors de la lecture d'un critère d'identification associé à la machine de chantier (2) à partir d'un transpondeur (6) d'une clé (4, 8),
les clés (4, 8) présentant des codages mécaniques uniformes étudiés pour l'accès au moins à la machine de chantier (2) et au moins à une autre machine de chantier (2), de sorte qu'avec ce codage mécanique uniforme, il est possible d'ouvrir au moins les deux différentes machines de chantier.

15. Procédé selon la revendication 14, **caractérisé en ce que**, suite à l'étape b), au cours d'une étape b1), le critère d'identification lu est transmis par la machine de chantier (2) à la clé principale (8) et est enregistré dans la clé principale (8).

16. Procédé selon la revendication 14 ou 15, **caractérisé en ce qu'**après l'étape b) ou l'étape b1), lors de l'association de la clé (4) à la machine de chantier (2), au moins le critère d'identification de la clé (4) est mis en mémoire dans la machine de chantier (2).

17. Procédé selon l'une des revendications 14 à 16, **caractérisé en ce qu'**après l'étape b) ou b1), une clé de cryptographie est transmise par la machine de chantier (2) à la clé (4) et **en ce que** la clé de cryptographie est utilisée pour une communication cryptée entre la machine de chantier (2) et la clé (4) pour le déblocage du dispositif antidémarrage (10).

18. Procédé selon l'une des revendications 14 à 17 précédentes, **caractérisé en ce que**, dans le cas de la lecture d'un critère d'identification d'une clé principale (8), on désactive ou supprime au moins une association d'un critère d'identification à une machine de chantier (2).

19. Procédé selon l'une des revendications 14 à 18 précédentes, **caractérisé en ce qu'**une association d'un critère d'identification est limitée dans le temps.
